# EUROPEAN PATENT SPECIFICATION

(11) **EP 4 415 071 B1**
(45) Date of publication and mention of the grant of the patent: **13.08.2025**
(21) Application number: 24155469.0
(22) Date of filing: 02.02.2024
(51) Int. Cl.: H01M 4/134, H01M 4/38, H01M 4/62, H01M 10/0525, H01M 10/0562

(54) **NEGATIVE ELECTRODE ACTIVE MATERIAL, NEGATIVE ELECTRODE, AND SOLID-STATE BATTERY**
NEGATIVELEKTRODENAKTIVMATERIAL, NEGATIVELEKTRODE UND FESTKÖRPERBATTERIE
MATÉRIAU ACTIF D'ÉLECTRODE NÉGATIVE, ÉLECTRODE NÉGATIVE ET BATTERIE À L'ÉTAT SOLIDE

(30) Priority: 06.02.2023 JP 2023016475
(43) Date of publication of application: 14.08.2024
(73) Proprietor: TOYOTA JIDOSHA KABUSHIKI KAISHA, Toyota-shi, Aichi-ken 471-8571 (JP)
(72) Inventor: NAKANISHI, Azusa, Toyota-shi, 471-8571 (JP)
(74) Representative: J A Kemp LLP

(56) References cited:
- CN-A- 110 492 062
- JP-A- 2019 021 571

## Description

### BACKGROUND

### Technical Field

The present disclosure relates to a negative electrode active material, a negative electrode, and a solid-state battery.

### Related Art

In recent years, secondary batteries such as lithium ion secondary batteries and the like have been suitably used as portable power sources for personal computers, portable terminals and the like, and as power sources for the driving of vehicles such as electric vehicles (EVs), hybrid vehicles (HVs), plug-in hybrid vehicles (PHVs) and the like, and the like.

Because electrolytic liquids containing flammable organic solvents are used in secondary batteries, there is the need for improvement in structures and materials for preventing short-circuiting and for mounting safety devices that suppress a rise in temperature at the time of short-circuiting. To address this, solid-state batteries, which use a solid electrolyte layer instead of an electrolytic liquid and in which the materials are made solid, do not use flammable organic solvents at the battery interior, and therefore, it is thought that simplification of safety devices is devised, and the manufacturing cost and mass producibility are excellent.

A technique of improving energy density by including Si in a negative electrode active material is known as a technique relating to the negative electrode of a solid-state battery. With such a negative electrode active material that contains Si, the energy density can be improved by the inclusion of Si. However, on the other hand, due to volumetric expansion/contraction that accompanies charging/discharging, gaps arise between the negative electrode active material layer and the solid electrolyte layer, and due thereto, there is the tendency for a phenomenon, in which the cell resistance after charging/discharging increases, to occur. Therefore, recently, a technique has been known that attempts to suppress the formation of gaps between the negative electrode active material layer and the solid electrolyte layer due to volumetric expansion/contraction that accompanies charging/discharging, by using, as the negative electrode active material, granulated particles of primary particles, which contain a silicon material, and a binder resin such as a fluorine-based polymer or the like (for example, Japanese Patent Application Laid-Open (JP-A) No. 2019-021571).

### SUMMARY

However, in a conventional negative electrode active material that is granulated particles of primary particles, which contain a silicon material, and a fluorine-based polymer, the silicon and the fluorine-based polymer surface charges are respectively charged negatively, and therefore, it is easy for the primary particles and the fluorine-based polymer to electrostatically repel one another. Therefore, the adhesion between the primary particles and the fluorine-based polymer is low, and due thereto, there is the tendency for the granulated particles to be weak, and the cycle characteristic (e.g., the discharge capacity maintenance rate after 200 cycles) to deteriorate.
Thus, in view of the above-described circumstances, a topic of the present disclosure is the provision of a negative electrode active material, a negative electrode and a solid-state battery that suppress a deterioration in the cycle characteristic when a battery has the negative electrode that contains the negative electrode active material in a negative electrode active material layer.

Means for addressing the above-described topic are defined in the claims.

According to the present disclosure, a negative electrode active material, a negative electrode and a solid-state battery that suppress deterioration in cycle characteristics when used in a solid-state battery, are provided.

### BRIEF DESCRIPTION OF THE DRAWINGS

Exemplary embodiments of the present disclosure will be described in detail based on the following figures, wherein:

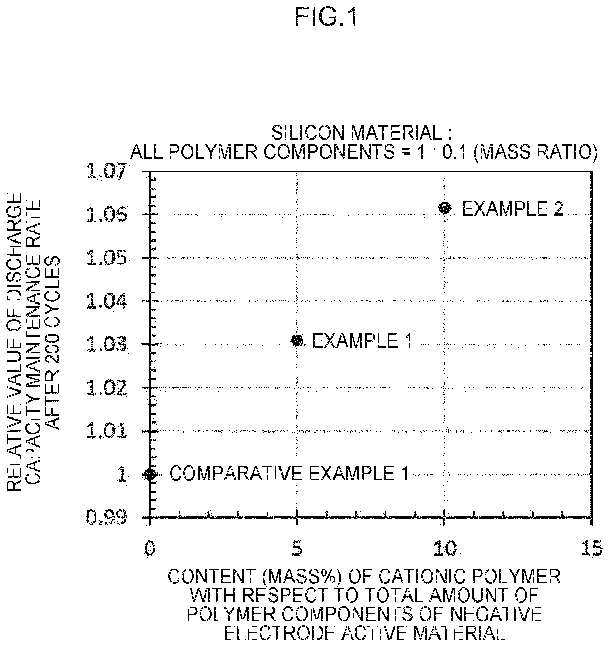

Fig. 1 is a graph illustrating the relationship between the relative value of the discharge capacity maintenance rate after 200 cycles and the content of a cationic polymer with respect to the total amount of the polymer components of a negative electrode active material in Examples 1, 2 and Comparative Example 1;

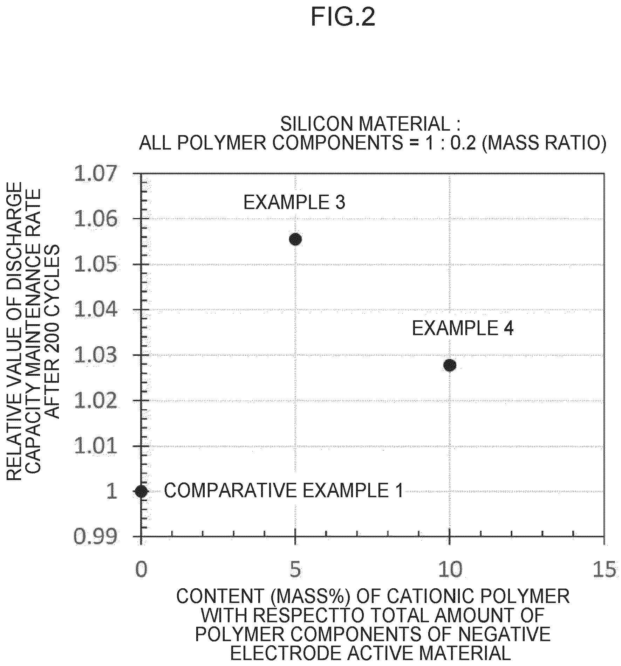

Fig. 2 is a graph illustrating the relationship between the relative value of the discharge capacity maintenance rate after 200 cycles and the content of a cationic polymer with respect to the total amount of the polymer components of a negative electrode active material in Examples 3, 4 and Comparative Example 1; and

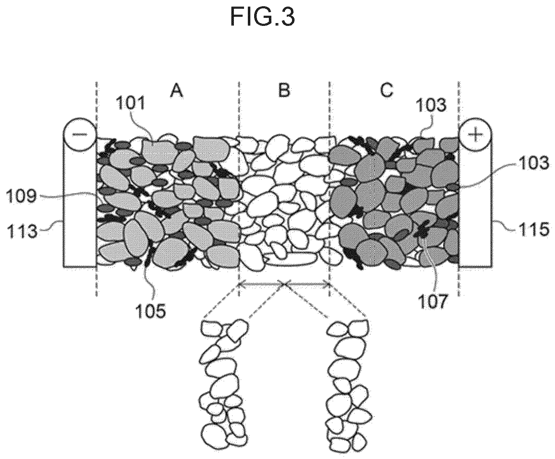

Fig. 3 is a cross-sectional view illustrating an embodiment of a solid-state battery of the present disclosure.

### DETAILED DESCRIPTION

Embodiments that are examples of the present disclosure are described hereinafter. The description thereof and the Examples are for exemplifying embodiments, and are not intended to limit the scope of the present disclosure.

In the present disclosure, numerical ranges expressed by using "~" mean ranges in which the numerical values listed before and after the "~" are included as the minimum value and the maximum value.

In numerical value ranges that are expressed in a stepwise manner in the present disclosure, the upper limit value or the lower limit value listed in a numerical value range may be substituted by the upper limit value or the lower limit value of another numerical value range that is expressed in a stepwise manner. Further, in the numerical value ranges put forth in the present disclosure, the upper limit value or the lower limit value of a numerical value range may be substituted by a value shown in the Examples.

In the present disclosure, in a case in which there are plural materials corresponding to respective components in a composition, the amount of the respective components in the composition means the total amount of the plural materials existing in the composition, unless otherwise indicated.

In the present disclosure "mass" and "weight" have the same meanings, and "mass%" and "weight%" have the same meanings.

In the present disclosure, combinations of two or more preferable aspects are more preferable aspects.

When describing groups (atom groups) in the present disclosure, if it is not stated whether a group is substituted or unsubstituted, the group may be either substituted or unsubstituted.

In the present disclosure, the term "layer" includes cases in which, when observing a region in which a layer exists, the layer is formed at the entirety of that region, and in addition thereto, also includes cases in which the layer is formed only at a portion of that region. In the present disclosure, the term "step" is not only an independent step and includes steps that, in a case in which that step cannot be clearly distinguished from another step, achieve the intended object of that step.

### <<Negative Electrode Active Material>>

The negative electrode active material relating to the present disclosure is granulated particles that contain primary particles, which contain at least a silicon material and a cationic polymer, and a fluorine-based polymer.

In accordance with the present disclosure, because the primary particles contain a cationic polymer in addition to the silicon material, the surface charge of the primary particles being a negative charge is suppressed. As a result, electrostatic repulsion of the primary particles and the fluorine-based polymer is suppressed, and the adhesion of the both can be improved. Therefore, at a battery that has a negative electrode including a negative electrode active material layer that contains the negative electrode active material, a deterioration in the cycle characteristic (e.g., the discharge capacity maintenance rate after 200 cycles) is suppressed.

### [Primary Particles]

The primary particles contain at least a silicon material and a cationic polymer.

The primary particles may further contain other materials that are other than a silicon material and a cationic polymer. Examples of these other materials are binder materials such as polyvinylidene fluoride (PVdF), styrene-butadiene rubber (SBR) and the like, and the like.

For example, from the standpoint of improving the adhesion between the primary particles and the fluorine-based polymer and obtaining a better cycle characteristic, the primary particles are preferably primary particles in which the cationic polymer covers at least partial regions of the particle surfaces of the silicon material, and are more preferably primary particles in which the cationic polymer covers the entire particle surfaces of the silicon material.

The aforementioned form of covering the primary particles can be confirmed by the strength ratio of C and Si measured by energy diffraction spectrometry (EDS) (measuring conditions: acceleration voltage: 5kV, emission current).

Specifying of the silicon material in the primary particles can be confirmed by X-ray diffraction (XRD) measurement (scanning speed: 1 deg/min).

Specifying of the cationic polymer in the primary particles can be confirmed by gas chromatography - mass spectrometry (GC-MS). Further, in confirming that the polymer is a cationic polymer, the charge of the polymer can be confirmed by dissolving a sample of the polymer in water and measuring the zeta potential by a zeta potentiometer.

### [Silicon Material]

The silicon material contains silicon. The silicon is not particularly limited provided that it is a material that can be employed as a negative electrode active material, and examples thereof are elemental silicon particles, silicon alloy particles (e.g., alloys or the like of Si and one or more metals selected from the group consisting of Sn, Ti, Fe, Ni, Cu, Co and Al), porous silicon, silicon clathrate compounds, silicon oxides, compounds of these, and the like.

Thereamong, from the standpoint of better suppressing volumetric expansion/contraction that accompanies charging/discharging, the silicon material preferably contains at least one of porous silicon or a silicon clathrate compound, and more preferably contains porous silicon.

One type of silicon material may be used alone, or two or more types may be used in combination.

The silicon material may be, for example, a mixture of porous silicon or a silicon clathrate compound, i.e., may be in a state in which a silicon monocrystal and a silicon cluster both exist within a single particle.

Porous silicon means a monocrystalline silicon that has been made porous.

Silicon clathrate compounds mean compounds in which a silicon cluster is the structural unit of the crystal, and, more specifically, mean compounds having a silicon clathrate type crystal phase.

Silicon clathrate compounds are classified into type I and type II in accordance with the type of the crystal phase thereof.
In the silicon clathrate compound, the silicon material preferably contains at least one crystal phase among type I and type II, and more preferably has one crystal phase among type I and type II as the main phase, and even more preferably has type II as the main phase. Here, "has a silicon clathrate type I or type II crystal phase as the main phase" means that any peak belonging to a silicon clathrate type I or type II crystal phase is the peak of the largest diffracted intensity among the peaks observed by X-ray diffraction measurement.

Silicon clathrate compounds are preferable from the standpoint that, because metal ions such as Li ions and the like can enter into the three-dimensional, cage-shaped structure, the amount of expansion is small, and, because fluctuations in volume accompanying charging/discharging of the battery are small, the cycle characteristic is even better.

### [Cationic Polymer]

A cationic polymer means a polymer having a cationic group or a group that becomes a cationic group when ionized. Amphoteric polymers that are cationic as a polymer on the whole also are included in this concept.

Examples of cationic polymers are polyethyleneimine; polyvinylamine; polyallylamine; polyaniline; polypyrrole; polyvinyl pyridine; polymers and copolymers of allylamine, pyridinium salt, allylamine hydrochloride, allylamine acetate, allylamine sulfate, diallylamine, diallylamine hydrochloride, diallylamine acetate, diallylamine sulfate, diallylmethylamine and salts thereof (examples of the salts are hydrochloride, acetate, sulfate and the like), and the like; polymers and copolymers of diallylethylamine and salts thereof (examples of the salts are hydrochloride, acetate, sulfate and the like), and the like; polymers and copolymers of diallyldimethyl ammonium salts (chloride, acetate ions, sulfate ions and the like are examples of counter anions of these salts) (e.g., polydiallyldimethyl ammonium chloride: PDADMAC). One type of cationic polymer may be used alone or two or more types may be used in combination.

Thereamong, from the standpoint of more efficiently making the primary particles cationic and improving the adhesion between the primary particles and the fluorine-based polymer, the cationic polymer preferably contains a polymer and copolymer of diallyldimethyl ammonium salt or the like, and more preferably contains PDADMAC.

Examples of the cationic polymer are polymers having a primary amino group, a secondary amino group, a tertiary amino group or a quaternary ammonium salt group as the cation. One type of cationic polymer may be used alone or two or more types may be used in combination.

Thereamong, from the standpoint of more efficiently making the primary particles cationic and improving the adhesion between the primary particles and the fluorine-based polymer, the cationic polymer preferably contains a polymer having a quaternary ammonium salt group as the cation, and more preferably contains a polymer having a quaternary ammonium salt group.

Note that counter anions of the quaternary ammonium salt are not particularly limited, and known anions can be used. However, from the standpoint of not impeding the battery characteristics even better, the counter anions may be chlorine ions.

The polystyrene conversion weight average molecular weight (Mw) of the cationic polymer determined by gel permeation chromatography (GPC) is not particularly limited, and, for example, from the standpoint of more efficiently making the primary particles cationic and improving the adhesion between the primary particles and the fluorine-based polymer, is preferably from 50,000 to 600,000, and more preferably from 80,000 to 5,500,000, and even more preferably from 100,000 to 5,000,000.

From the standpoint of more efficiently making the primary particles cationic and improving the adhesion between the primary particles and the fluorine-based polymer, the content of the cationic polymer, with respect to the total amount of the polymer components of the negative electrode active material, is preferably from 1 mass% to 15 mass%, and more preferably from 3 mass% to15 mass%, and even more preferably from 3 mass% to 10 mass%.

The primary particles may further contain other materials other than a silicon material and a cationic polymer, within ranges in which the effects of the present disclosure can be exhibited. Examples of these other materials are binder materials such as polyvinylidene fluoride (PVdF), styrene-butadiene rubber (SBR) and the like, and the like.

### [Fluorine-Based Polymer]

The fluorine-based polymer means a polymer containing a structural unit derived from a fluorine-group-containing compound.

The fluorine-based polymer is not particularly limited, and known materials can be used therefor. Examples of the fluorine-based polymer are vinylidene fluoride resin (PVdF), poly(vinylidene fluoride-co-hexafluoropropylene) (PVdF-HFP), polytetrafluoroethylene (PTFE), perfluoroethylene propylene copolymer (FEP), poly chlorotrifluoroethylene resin (PCTFE), poly vinyl fluoride resin (PVF), poly tetrafluoroethylene perfluoroalkyl vinyl ether resin (PFA), ethylene - tetrafluoroethylen resin (ETFE), ethylenechlorotrifluoroethylene resin (ECTFE) and the like. One type of fluorine-based polymer may be used alone, or two or more types may be used in combination.

Thereamong, from the standpoint of more efficiently improving the adhesion between the primary particles and the fluorine-based polymer, and from the standpoint of the battery characteristics, it is preferable that the fluorine-based polymer be a polymer containing a structural unit derived from vinylidene fluoride. Specifically, it is preferable that at least one of PVdF and PVdF-HFP be contained as the fluorine-based polymer, and it is more preferable that PVdF-HFP be contained.

The polystyrene conversion weight average molecular weight (Mw) of the fluorine-based polymer determined by gel permeation chromatography (GPC) is not particularly limited, and, for example, from the standpoint of more efficiently making the primary particles cationic and improving the adhesion between the primary particles and the fluorine-based polymer, is preferably from 50,000 to1,000,000, and more preferably from 200,000 to 900,000, and even more preferably from 300,000 to 800,000.

In the negative electrode active material, from the standpoint of more efficiently making the primary particles cationic and improving the adhesion between the primary particles and the fluorine-based polymer, and from the standpoint of the battery characteristics, the total amount of the polymer components with respect to the negative electrode active material is from 5 mass% to 25 mass%, and the content of the cationic polymer with respect to the total amount of the polymer components of the granulated particles is preferably from 3 mass% to 10 mass%.

From the standpoint of more efficiently making the primary particles cationic and improving the adhesion between the primary particles and the fluorine-based polymer, and from the standpoint of the battery characteristics, the total amount of the polymer components in the negative electrode active material (i.e., the total amount of the polymer components including the cationic polymer and the fluorine-based polymer) with respect to the negative electrode active material is preferably from 1 mass% to 30 mass%, and more preferably from 5 mass% to 25 mass%, and even more preferably from 10 mass% to 20 mass%.

### [Properties and the like of Negative Electrode Active Material]

The negative electrode active material may be granulated particles that further include other materials in addition to the primary particles and the fluorine-based polymer, and that have been granulated. Examples of these other materials are binder materials such as polyvinylidene fluoride (PVdF), styrene-butadiene rubber (SBR) and the like, and the like.

An example of the shape of the negative electrode active material is particle-shaped.

The particle diameter of the negative electrode active material is not particularly limited, and, for example, from the standpoint of the battery characteristics, is preferably from 10 µm to 100 µm, and is more preferably from 10 µm to 50 µm.

From the standpoint of having a better cycle characteristic, the particle diameter of the negative electrode active material is preferably from 0.5 µm to 100 µm, and is more preferably from 1 µm to 50 µm.

With regard to the particle diameter of the negative electrode active material, the negative electrode active material is dispersed in a dispersion medium, and the volume-based particle size distribution is measured by using a laser diffraction particle size analyzer. The particle diameter, at which the value of the obtained volume-based cumulative particle size distribution corresponds to 50%, is used as the particle diameter of the negative electrode active material.

### [Method of Manufacturing Negative Electrode Active Material]

The method of manufacturing the negative electrode active material of the present disclosure is not particularly limited, and a known method of manufacturing a negative electrode active material can be used. The negative electrode active material of the present disclosure may manufactured by, for example, mixing a silicon material and a cationic polymer together in a solution, and thereafter, heating and kneading and forming primary particles, and thereafter, dispersing and granulating the primary particles in a solution system containing a fluorine-based polymer.

### <Negative Electrode>

The negative electrode of the present disclosure contains the negative electrode active material of the present disclosure.

In accordance with the present disclosure, when the negative electrode is used in a solid-state battery, deterioration of the cycle characteristic is suppressed.

The negative electrode of the present disclosure is, for example, a layer that has a negative electrode collector and a negative electrode active material layer that is provided on the negative electrode collector and contains the negative electrode active material. As needed, the negative electrode active material layer may further contain at least one of a conductive material, a solid electrolyte and a binder.

Examples of the conductive material are carbon materials, conductive polymers, metal particles, and the like.

Examples of carbon materials are particle-shaped carbon materials, fiber-shaped carbon materials and the like. Examples of particle-shaped carbon materials are acetylene black (AB), ketjen black (KB) and the like. Examples of fiber-shaped carbon materials are carbon nanotubes (CNT), carbon nanofibers (CNF), VGCF, and the like.

Examples of conductive polymers are polythiophene, polyacetylene, poly(p-phenylene), polyisothianaphthene, and the like.

Examples of metal particles are particles made of nickel, copper, iron, stainless steel and the like.

Examples of the solid electrolyte are similar to those exemplified as the solid electrolytes that can be contained in the solid electrolyte layer.

Examples of the binder are rubber binders, fluoride binders, and the like. Examples of rubber binders are butadiene rubber, hydrogenated butadiene rubber, styrene-butadiene rubber (SBR), hydrogenated styrene-butadiene rubber, nitrile butadiene rubber, hydrogenated nitrile butadiene rubber, ethylene propylene rubber and the like. Examples of fluoride binders are polyvinylidene fluoride (PVDF), polyvinylidene fluoride - polyhexafluoropropylene copolymer (PVDF-HFP), polytetrafluoroethylene, fluororubbers, and the like.

The negative electrode collector performs power collection at the negative electrode layer. The negative electrode collector is disposed at a position which is at the side of the negative electrode layer opposite the side at which the solid electrolyte layer is disposed. Examples of the material of the negative electrode collector are stainless steel, copper, nickel, carbon and the like. Examples of the form of the negative electrode collector are the form of a foil and the form of a mesh.

The thickness of the negative electrode active material layer is not particularly limited, and is preferably from 0.1 µm to 100 µm, and is more preferably from 1 µm to 100 µm, and is even more preferably from 30 µm to 100 µm.

### <Solid-State Battery>

The solid-state battery of the present disclosure has the negative electrode of the present disclosure (hereinafter called negative electrode layer), a positive electrode (hereinafter called positive electrode layer), and a solid electrolyte layer.

Solid-state batteries include solid state batteries that use an inorganic solid electrolyte (i.e., whose content of electrolytic liquid that serves as the electrolyte is less than 10 mass% of the entire amount of the electrolyte).

In accordance with the present disclosure, a deterioration in the cycle characteristic is suppressed.

Fig. 3 is a schematic sectional view illustrating an embodiment of a solid electrolyte of the present disclosure.

Fig. 3 is a schematic sectional view illustrating an embodiment of a solid-state battery. As illustrated in Fig. 3, a negative electrode layer A, a solid electrolyte layer B and a positive electrode layer C are layered.

In Fig. 3, a negative electrode active material is denoted by reference numeral 101, a positive electrode active material is denoted by reference numeral 103, conduction assistants are denoted by reference numerals 105 and 107, binders are denoted by reference numerals 109 and 111, a negative electrode collector is denoted by reference numeral 113, and a positive electrode collector is denoted by reference numeral 115. The solid electrolyte layer may be a two-layer structure as illustrated in Fig. 3.

The solid-state battery may be structured such that the layer end surfaces (side surfaces) of a layered structure of a positive electrode / a solid electrolyte layer / a negative electrode are sealed by a resin. The collector of the electrode may be a structure in which a shock-absorbing layer, an elastic layer or a PTC (Positive Temperature Coefficient) thermistor layer is disposed on the surface of the collector.

Given that the power generating unit is the set of the positive electrode layer, the solid electrolyte layer and the negative electrode layer, the solid-state battery may have only one power generating unit or may have two or more power generating units. In a case in which the solid-state battery has two or more power generating units, these power generating units may be connected in series or may be connected in parallel.

### [Negative Electrode Layer]

The solid-state battery includes a negative electrode layer. The negative electrode layer is structured by the above-described negative electrode of the present disclosure.

### [Positive Electrode Layer]

The solid-state battery includes a positive electrode layer. The positive electrode layer contains a positive electrode active material.

The positive electrode layer is a layer having, for example, a positive electrode collector and a positive electrode active material layer that is provided on the positive electrode collector and contains a positive electrode active material.

The positive electrode active material preferably contains a lithium composite oxide. The lithium composite oxide may contain at least one type selected from the group consisting of F, Cl, N, S, Br and I. Further, the lithium composite oxide may have a crystal structure belonging to at least one space group selected from space groups R-3m, Immm, and P63-mmc (also called P63mc, P6/mmc). In the lithium composite oxide, the main sequence of a transition metal, oxygen and lithium may be an O2-type structure.

Examples of lithium composite oxides having a crystal structure belonging to R-3m are compounds expressed by LiₓMe_{y}O_{α}X_{β} (Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one type selected from the group consisting of F, Cl, N, S, Br and I, and 0.5≤x≤1.5, 0.5≤y≤1.0, 1≤α<2, 0<β≤1 are satisfied).

Examples of lithium composite oxides having a crystal structure belonging to Immm are composite oxides expressed by Liₓ₁M¹A¹₂ (1.5≤x1≤2.3 is satisfied, M¹ includes at least one type selected from the group consisting of Ni, Co, Mn, Cu and Fe, A¹ includes at least oxygen, and the ratio of the oxygen contained in A¹ is greater than or equal to 85 atom%) (a specific example is Li₂NiO₂), and composite oxides expressed by Liₓ₁M^{1A}₁₋ₓ₂M^{1B}ₓ₂O_{2-y}A²_{y} (0≤x2≤0.5 and 0≤y≤0.3, at least one of x2 and y is not 0, M^{1A} represents at least one type selected from the group consisting of Ni, Co, Mn, Cu and Fe, M^{1B} represents at least one type selected from the group consisting of Al, Mg, Sc, Ti, Cr, V, Zn, Ga, Zr, Mo, Nb, Ta and W, and A2 represents at least one type selected from the group consisting of F, Cl, Br, S and P).

Examples of lithium composite oxides having a crystal structure belonging to P63-mmc are composite oxides expressed by M1ₓM2_{y}O₂ (M1 represents an alkali metal (at least one of Na and K is preferable), M2 represents a transition metal (at least one type selected from the group consisting of Mn, Ni, Co and Fe is preferable), and x+y satisfies 0<x+y≤2).

Examples of lithium composite oxides having an O2-type structure are composite oxides expressed by Liₓ[Li_{α}(MnₐCo_{b}M_{c})_{1-α}]O₂ (0.5<x<1.1, 0.1<α<0.33, 0.17<a<0.93, 0.03<b<0.50, 0.04<c<0.33, and M represents at least one type selected from the group consisting of Ni, Mg, Ti, Fe, Sn, Zr, Nb, Mo, W and Bi). Specific examples are Li_{0.744}[Li_{0.145}Mn_{0.625}Co_{0.115}Ni_{0.115}]O₂ and the like.

The positive electrode layer may further contain at least one of a conductive material, a solid electrolyte and a binder as needed. Thereamong, it is preferable that the positive electrode layer contain a solid electrolyte.

Examples of the conductive material are similar to those exemplified as conductive materials that can be contained in the negative electrode layer.

For example, it is preferable that at least one type of solid electrolyte selected from the group of solid electrolytes consisting of sulfide solid electrolytes, oxide solid electrolytes, and halide solid electrolytes is contained as the solid electrolyte.

At the positive electrode layer, a form in which at least a portion of the surface of the positive electrode active material is covered by a sulfide solid electrolyte, an oxide solid electrolyte or a halide solid electrolyte is preferable. Li_{6-(4-x)b}(Ti₁₋ₓAlₓ)_{b}F₆ (0<x<1, 0<b≤1.5) [LTAF electrolyte] is preferable as the halide solid electrolyte that covers at least a portion of the surface of the positive electrode active material.

Examples of the binder are similar to those exemplified as binders that can be contained in the negative electrode layer.

The thickness of the positive electrode active material layer is preferably from 0.1 µm to 100 µm, and more preferably from 1 µm to 100 µm, and even more preferably from 30 µm to 100 µm.

The positive electrode collector carries out power collection of the positive electrode layer. The positive electrode collector is disposed at a position at the side of the positive electrode layer, which side is opposite the side at which the solid electrolyte layer is located. Examples of the material of positive electrode collector are stainless steel, aluminum, nickel, iron, titanium, carbon and the like. Examples of the form of the positive electrode collector are the form of a foil and the form of a mesh.

### [Solid Electrolyte Layer]

The solid-state battery includes a solid electrolyte layer.

It is preferable that at least one type of solid electrolyte selected from the group of solid electrolytes consisting of sulfide solid electrolytes, oxide solid electrolytes, and halide solid electrolytes is contained as the solid electrolyte.

The sulfide solid electrolyte preferably contains sulfur (S) as the main component that is an anion element, and further, preferably contains, for example, the element Li, element A and the element S. Element A is at least one type selected from the group consisting of P, As, Sb, Si, Ge, Sn, B, Al, Ga and In. The sulfide solid electrolyte may further contain at least one of O and a halogen element. Examples of the halogen element (X) are F, Cl, Br, I and the like. The composition of the sulfide solid electrolyte is not particularly limited, and examples are xLi₂S·(100-x)P₂S₅ (70≤x≤80) and yLiI·zLiBr· (100-y-z)(xLi₂S·(1-x)P₂S₅) (0.7≤x≤0.8, 0≤y≤30, 0≤z≤30). The sulfide solid electrolyte may have the composition expressed by following general formula (1).

Li₄₋ₓGe₁₋ₓPₓS₄ (0<x<1) ... formula (1)

In formula (1), at least a portion of Ge may be substituted by at least one selected from the group consisting of Sb, Si, Sn, B, Al, Ga, In, Ti, Zr, V and Nb. Further, at least a portion of P may be substituted by at least one selected from the group consisting of Sb, Si, Sn, B, Al, Ga, In, Ti, Zr, V and Nb. A portion of Li may be substituted by at least one selected from the group consisting of Na, K, Mg, Ca and Zn. A portion of S may be substituted by a halogen. The halogen is at least one of F, Cl, Br and I.

The oxide solid electrolyte preferably contains oxygen (O) as the main component that is an anion element, and, for example, may contain Li, element Q (Q represents at least one of Nb, B, Al, Si, P, Ti, Zr, Mo, W and S), and O. Examples of the oxide solid electrolyte are garnet type solid electrolytes, perovskite type solid electrolytes, NASICON type solid electrolytes, Li-P-O solid electrolytes, Li-B-O solid electrolytes, and the like. Examples of garnet type solid electrolytes are Li₇La₃Zr₂O₁₂, Li₇₋ₓLa₃(Zr₂₋ₓNbₓ)O₁₂ (0≤x≤2), Li₅La₃Nb₂O₁₂, and the like. Examples of perovskite type solid electrolytes are (Li,La)TiO₃, (Li,La)NbO₃, (Li,Sr)(Ta,Zr)O₃ and the like. Examples of NASICON type solid electrolytes are Li(Al,Ti)(PO₄)₃, Li(Al,Ga)(PO₄)₃, and the like. Examples of Li-P-O solid electrolytes are Li₃PO₄ and LIPON (compounds in which some of the O in Li₃PO₄ is substituted with N). Examples of Li-B-O solid electrolytes are Li₃BO₃, compounds in which some of the O in Li₃BO₃ is substituted with C, and the like.

As the halide solid electrolyte, solid electrolytes containing Li, M and X (M represents at least one of Ti, Al and Y, and X represents F, Cl or Br) are suitable. Specifically, Li_{6-3z}Y_{z}X₆ (X represents Cl or Br, and z satisfies 0<z<2) and Li_{6-(4-x)b}(Ti₁₋ₓAlₓ)_{b}F₆ (0<x<1, 0<b≤1.5) are preferable. Among Li_{6-3z}Y_{z}X₆, from the standpoint of having excellent lithium ion conductivity, Li₃YX₆ (X represents Cl or Br) is more preferable, and Li₃YCl₆ is even more preferable. Further, from standpoints such as, for example, suppressing oxidative decomposition of the sulfide solid electrolyte and the like, it is preferable that Li_{6-(4-x)b}(Ti₁₋ₓAlₓ)_{b}F₆ (0<x<1, 0<b≤1.5) be contained together with a solid electrolyte such as a sulfide solid electrolyte or the like.

The ratio of the negative electrode active material layer and the solid electrolyte layer (negative electrode active material layer / solid electrolyte layer) is not particularly limited, but, for example, is preferably from 85/15 to 30/70, and is more preferably 80/20 to 40/60.

The ratio of the positive electrode active material layer and the solid electrolyte layer (positive electrode active material layer / solid electrolyte layer) is not particularly limited, but, for example, is preferably from 85/15 to 30/70, and is more preferably from 80/20 to 50/50.

### [Exterior Body]

The solid-state battery may further have an exterior body. The exterior body houses at least the above-described power generating unit. Examples of the exterior body are a laminate-type exterior body, a case-type exterior body, and the like.

### [Restraining Member]

The solid-state battery may further have a restraining member. The restraining member applies restraining pressure in the thickness direction to the positive electrode layer, the solid electrolyte layer and the negative electrode layer. The restraining pressure is preferably 0.1 MPa or more, and is more preferably 1 MPa or more, and is even more preferably 5 MPa or more. The restraining pressure is preferably 100 MPa or less, and more preferably 50 MPa or less, and even more preferably 20 MPa or less. The restraining pressure is preferably from 0.1 MPa to 100 MPa.

### [Application]

The solid-state battery of the present disclosure is a typical solid-state secondary battery (more preferably, a solid-state lithium ion secondary battery). The solid-state battery can be used, for example, as the power source of a vehicle, electronic equipment, electrical storage devices, and the like. Examples of vehicles are electric four-wheel vehicles, electric two-wheel vehicles, gasoline-powered vehicles, diesel-powered vehicles and the like. Examples of electric four-wheel vehicles are electric vehicles (BEVs), plug-in hybrid vehicles (PHEVs), hybrid vehicles (BEVs), and the like. Examples of electric two-wheel vehicles are electric motorbikes, electrically assisted bicycles and the like. Examples of electronic equipment are handheld devices (e.g., smartphones, tablet computers, audio players and the like), portable devices (e.g., notebook computers, CD (compact disc) players, and the like), mobile equipment (e.g., power tools, commercial video cameras, and the like), and the like. Thereamong, the solid-state battery of the present disclosure is preferably used as a power source for the driving of hybrid vehicles, plug-in hybrid vehicles, and electric vehicles.

### EXAMPLES

### <Example 1>

5 parts of porous Si that is a porous material, and 0.125 parts of an aqueous solution of 20 volume% poly(diallyldimethylammonium chloride) (PDADMAC) (manufactured by Sigma-Aldrich, weight average molecular weight (Mw): 200,000 ~ 350,000) that is a cationic polymer having a quaternary ammonium salt group as the cation, were weighed-out into a mortar, and 20 mL of water was added thereto. Thereafter, by kneading the mixture while heating, water was evaporated, and primary particles containing a silicon material and a cationic polymer (more specifically, porous Si at which partial regions where coated by PDADMAC) were obtained.

Next, the primary particles that were prepared as described above were dispersed in a solution in which poly(vinylidene fluoride-co-hexafluoropropylene) (PVdF-HFP, a fluorine-based polymer containing a structural unit derived from vinylidene fluoride, KF8300 manufactured by Kureha Corporation) was dissolved in dimethyl carbonate such that the mass ratio of the PDADMAC and PVdF-HFP was 5:95. By using a spray drier, the solution was granulated, and a negative electrode active material, which was granulated particles containing primary particles containing silicon material and a cationic polymer, and a fluorine-based polymer, was obtained.

In the obtained granulated particles, the total amount of the polymer components (i.e., the total amount of the cationic polymer and the fluorine-based polymer) with respect to the granulated particles on the whole was 10 mass%, and the content of the cationic polymer (PDADMAC) with respect to the total amount of the polymer components of the granulated particles was 5 mass%.

### <Example 2>

A negative electrode active material was obtained by using the same specifications as Example 1, except that the mass ratio of PDADMAC and PVdF-HFP was made to be 10:90 (i.e., the content of the cationic polymer (PDADMAC) with respect to the total amount of the polymer components of the granulated particles was made to be 10 mass%).

### <Example 3>

A negative electrode active material was obtained by using the same specifications as Example 1, except that the added amounts of the cationic polymer and the fluorine-based polymer were adjusted such that the total amount of the polymer components (i.e., the total amount of the cationic polymer and the fluorine-based polymer) with respect to the granulated particles on the whole was 20 mass%.

### <Example 4>

A negative electrode active material was obtained by using the same specifications as Example 1, except that the mass ratio of PDADMAC and PVdF-HFP was made to be 10:90 (i.e., the content of the cationic polymer (PDADMAC) with respect to the total amount of the polymer components of the granulated particles was made to be 10 mass%), and the added amounts of the cationic polymer and the fluorine-based polymer were adjusted such that the total amount of the polymer components (i.e., the total amount of the cationic polymer and the fluorine-based polymer) with respect to the granulated particles on the whole was 20 mass%.

### <Comparative Example 1>

5 parts of porous Si that is a porous material was added into a dimethyl carbonate solution in which 0.5 parts of PVdF-HFP that is a fluorine-based polymer was dissolved, and thereafter, stirring was carried out and the porous Si was dispersed. By using a spray drier, the solution was granulated, and a negative electrode active material, which was granulated particles that contained primary particles containing a silicon material, and a fluorine-based polymer, was obtained.

In the obtained granulated particles, the total amount of the polymer components (i.e., the total amount of the cationic polymer and the fluorine-based polymer) with respect to the granulated particles on the whole was 10 mass%, and the content of the cationic polymer (PDADMAC) with respect to the total amount of the polymer components of the granulated particles was 0 mass%.

### <Fabrication of Solid-State Battery>

### [Preparation of Negative Electrode Layer]

A mixed solvent of dibutylether and mesitylene, a butyl acetate solution of 5 wt% PVDF binder, VGCF that is a conduction assistant, and Li₂S-P₂S₅ glass ceramic that is a solid electrolyte were placed in a container made of PP and stirred. Thereafter, the negative electrode active material of each example was further added thereto, and this mixture was stirred for 30 seconds by an ultrasonic disperser (UH-50 manufactured by SMT Co., Ltd.). Next, the mixture was shaken for 30 minutes by a shaker (TTM-1 manufactured by Sibata Scientific Technology Ltd.). The mixture was then coated on a Cu foil (manufactured by UACJ) by a blade method using an applicator. The coated electrode was dried for 30 minutes on a hot plate of 100°C, and a negative electrode layer was obtained.

### [Preparation of Positive Electrode Layer]

A butyl acetate solvent, a butyl acetate solution of 5 wt% PVDF binder, LiNi_{1/3}Co_{1/3}Mn_{1/3}O₂ of an average particle diameter of 6 µm that is a positive electrode active material, an Li₂S-P₂S₅ glass ceramic that is a sulfide solid electrolyte, and VGCF that is a conduction assistant were placed in a container made of PP and mixed together, and were stirred for 30 seconds by an ultrasonic disperser (UH-50 manufactured by SMT Co., Ltd.). Next, the mixture was shaken for 3 minutes by a shaker (TTM-1 manufactured by Sibata Scientific Technology Ltd.), and was further stirred for 30 seconds by the ultrasonic disperser. Thereafter, this solution was coated on an Al foil (manufactured by Showa Denko) by a blade method using an applicator. The coated electrode was dried for 30 minutes on a hot plate of 100°C, and a positive electrode layer was obtained.

### [Preparation of Solid Electrolyte Layer]

A heptane solvent, a heptane solution of 5 wt% SBR binder, and an Li₂S-P₂S₅ glass ceramic that is a solid electrolyte were added into a container made of PP, and were stirred for 30 seconds by an ultrasonic disperser (UH-50 manufactured by SMT Co., Ltd.). Next, the mixture was shaken for 30 minutes by a shaker (TTM-1 manufactured by Sibata Scientific Technology Ltd.). Thereafter, this solution was coated on an Al foil by a blade method using an applicator. The coated electrode was dried for 30 minutes on a hot plate of 100°C, and a solid electrolyte layer was obtained.

### [Fabrication of Solid-State Battery]

The above-described positive electrode layer and a first solid electrolyte layer were layered in that order. This layered body was set in a roll press, and was pressed with the press pressure in this first pressing step being 100 kN/cm and the pressing temperature being 165°C, and a positive electrode layered body was thereby obtained.

The above-described negative electrode layer was set in a roll press, and was pressed with the press pressure in this second pressing step being 60 kN/cm and the pressing temperature being 25°C, and a negative electrode layered body was thereby obtained.

Moreover, an Al foil serving as a peel-off sheet, an intermediate solid electrolyte layer formed on this Al foil, and the above-described negative electrode layered body that had a second solid electrolyte layer, a negative electrode active material layer and a Cu foil serving as the negative electrode collector, were layered in that order. This layered body was set in a flat, uniaxial press machine, and was temporarily pressed for 10 seconds at 100 MPa and 25°C. The Al foil was peeled-off from the intermediate solid electrolyte layer of this layered body, and a negative electrode layered body in which an intermediate solid electrolyte layer was further layered (intermediate solid electrolyte layer / second solid electrolyte layer / negative electrode active material layer / negative electrode collector layer) was obtained. Note that the negative electrode layered body and the positive electrode layered body were fabricated such that the surface area of the negative electrode layered body was larger than the surface area of the positive electrode layered body.

The above-described positive electrode layered body, and the negative electrode layered body in which the first solid electrolyte layer was further layered, were layered in that order. This layered body (positive electrode layered body / first solid electrolyte layer / intermediate solid electrolyte layer / second solid electrolyte layer / negative electrode active material layer / negative electrode collector layer) was set in a flat, uniaxial press machine, and was pressed for one minute with the press pressure in this third pressing step being 200 MPa and the pressing temperature being 120°C. A solid-state battery was thereby obtained.

### <Evaluation of Battery Cycle Characteristic>

The solid-state batteries fabricated by using the negative electrode active materials of the respective examples were restrained at a predetermined restraining pressure by using a restraining jig, and were charged at a constant current at 1/10 C until 4.55 V, and thereafter, were discharged at 1 C to 3.0 V, and constant current - constant voltage charging was carried out at 1/3 C to 4.35 V, and constant current - constant voltage discharging was carried out at 1/3 C until 3.00 V. Thereafter, a constant current charging/discharging test was repeated 200 times at 2 C as a cycling test. The maintenance rate from the initial discharge capacity of the cycling test that was obtained was calculated as the discharge capacity maintenance rate after 200 cycles. The discharge capacity maintenance rates after 200 cycles in the Examples were relative values with respect to the discharge capacity maintenance rate after 200 cycles of Comparative Example 1.

Fig. 1 is a graph illustrating the relationship between the relative value of the discharge capacity maintenance rate after 200 cycles and the content of the cationic polymer with respect to the total amount of the polymer components of the negative electrode active material in Examples 1, 2 and Comparative Example 1.

Fig. 2 is a graph illustrating the relationship between the relative value of the discharge capacity maintenance rate after 200 cycles and the content of the cationic polymer with respect to the total amount of the polymer components of the negative electrode active material in Examples 3, 4 and Comparative Example 1.

As illustrated in Fig. 1 and Fig. 2, it can be understood that the solid-state batteries that contain the negative electrode active material of the Examples have an excellent discharge capacity maintenance rate after 200 cycles, as compared with the solid-state battery containing the negative electrode active material of the Comparative Example.

As illustrated in Fig. 1, it can be understood that, in a case in which the mass ratio of the silicon material and all of the polymer components contained in the negative electrode active material is 1 : 0.1, the discharge capacity maintenance rate after 200 cycles is better in Example 2 in which the content of the cationic polymer with respect to the total amount of the polymer components of the negative electrode active material is 10 mass%, as compared with Example 1 in which the content is 5 mass%.

As illustrated in Fig. 2, it can be understood that, in a case in which the mass ratio of the silicon material and all of the polymer components contained in the negative electrode active material is 1 : 0.2, the discharge capacity maintenance rate after 200 cycles is better in Example 3 in which the content of the cationic polymer with respect to the total amount of the polymer components of the negative electrode active material is 5 mass%, as compared with Example 4 in which the content is 10 mass%.

## Claims

1. A negative electrode active material, comprising:
granulated particles, the granulated particles comprising:
primary particles containing at least a silicon material and a cationic polymer; and
a fluorine-based polymer.

2. The negative electrode active material of claim 1, wherein the cationic polymer includes a polymer having a quaternary ammonium salt group as a cation.

3. The negative electrode active material of claim 1, wherein the fluorine-based polymer is a polymer containing a structural unit derived from vinylidene fluoride.

4. The negative electrode active material of claim 1, wherein a total amount of polymer components with respect to the negative electrode active material is from 5 mass% to 25 mass%, and a content of the cationic polymer with respect to a total amount of polymer components of the negative electrode active material is from 3 mass% to 10 mass%.

5. The negative electrode active material of claim 1, wherein the silicon material includes at least one of porous silicon or a silicon clathrate compound.

6. A negative electrode, comprising the negative electrode active material of any one of claims 1 through 5.

7. A solid-state battery, comprising:
the negative electrode of claim 6;
a positive electrode; and
a solid electrolyte layer.

## Patentansprüche

1. Aktives Material für negative Elektroden, umfassend:
granulierte Teilchen, wobei die granulierten Teilchen umfassen:
Primärteilchen, die wenigstens ein Siliziummaterial und ein kationisches Polymer enthalten; und
ein Polymer auf Fluorbasis.

2. Aktives Material für negative Elektroden nach Anspruch 1, wobei das kationische Polymer ein Polymer mit einer quaternären Ammoniumsalzgruppe als Kation beinhaltet.

3. Aktives Material für negative Elektroden nach Anspruch 1, wobei das Polymer auf Fluorbasis ein Polymer ist, das eine von Vinylidenfluorid abgeleitete Struktureinheit enthält.

4. Aktives Material für negative Elektroden nach Anspruch 1, wobei die Gesamtmenge der Polymerkomponenten in Bezug auf das aktive Material für negative Elektroden 5 Masse-% bis 25 Masse-% beträgt und ein Gehalt des kationischen Polymers in Bezug auf die Gesamtmenge der Polymerkomponenten des aktiven Materials für negative Elektroden 3 Masse-% bis 10 Masse-% beträgt.

5. Aktive Material für negative Elektroden nach Anspruch 1, wobei das Siliziummaterial wenigstens eines von porösem Silizium oder einer Siliziumclathratverbindung beinhaltet.

6. Negative Elektrode, umfassend das aktive Material für negative Elektroden nach einem der Ansprüche 1 bis 5.

7. Festkörperbatterie, umfassend:
die negative Elektrode nach Anspruch 6;
eine positive Elektrode; und
eine feste Elektrolytschicht.

## Revendications

1. Matériau actif d'électrode négative, comprenant :
des particules granulées, les particules granulées comprenant :
des particules primaires contenant au moins un matériau de silicium et un polymère cationique ; et
un polymère à base de fluor.

2. Matériau actif d'électrode négative selon la revendication 1, dans lequel le polymère cationique inclut un polymère présentant un groupe sel d'ammonium quaternaire en tant que cation.

3. Matériau actif d'électrode négative selon la revendication 1, dans lequel le polymère à base de fluor est un polymère contenant une unité structurelle dérivée du fluorure de vinylidène.

4. Matériau actif d'électrode négative selon la revendication 1, dans lequel une quantité totale de composants polymères par rapport au matériau actif d'électrode négative est de 5 % en masse à 25 % en masse, et une teneur en polymère cationique par rapport à une quantité totale de composants polymères du matériau actif d'électrode négative est de 3 % en masse à 10 % en masse.

5. Matériau actif d'électrode négative selon la revendication 1, dans lequel le matériau de silicium inclut au moins l'un parmi du silicium poreux ou un composé clathrate de silicium.

6. Électrode négative comprenant le matériau actif d'électrode négative selon l'une quelconque des revendications 1 à 5.

7. Batterie tout-solide, comprenant :
l'électrode négative de la revendication 6 ;
une électrode positive ; et
une couche d'électrolyte solide.
